# EUROPEAN PATENT SPECIFICATION

(11) **EP 2 426 072 B1**
(45) Date of publication and mention of the grant of the patent: **04.09.2013**
(21) Application number: 11180469.6
(22) Date of filing: 07.09.2011
(51) Int. Cl.: B65G 49/06

(54) **Magazine for storing glass sheets**
Magazin zum Lagern von Glasplatten
Magasin de stockage de feuilles de verre

(30) Priority: 07.09.2010 IT MI20101617
(43) Date of publication of application: 07.03.2012
(73) Proprietor: Officine Mistrello S.r.l., 35040 Ponso (Padova) (IT)
(72) Inventor: Mistrello, Marco, 35040 Ponso (PD) (IT); Aldegheri, Matteo, 35045 Ospedaletto Euganeo (PD) (IT)
(74) Representative: Bonvicini, Davide

(56) References cited:
- CH-A- 487 785
- DE-A1- 19 509 076
- DE-U1- 8 706 291
- DE-U1-202008 011 686
- DE-U1-202008 013 148
- JP-A- 63 147 706
- US-A- 5 427 225

## Description

The present invention relates to a glass sheet storage magazine, particularly for flat glass sheets as defined in the preamble of claim 1.

In glass manufacturing factories, glass sheets are transferred from manufacturing stations to storage stations, and are later picked up from the storage stations for shipment and sale. For this purpose, glass sheets are handled and transferred using appropriate glass sheet storage systems.

A glass sheet storage system is disclosed, for instance, in US 5,427,225, by Oimatsu Ind Company Limited, and has a tilting device for receiving and transferring glass sheets from and to a storage magazine respectively. The tilting device is adapted to slide on floor-mounted rails on one side of the storage device and allows to move a sheet from a horizontal position to a vertical position. Once the sheet has been moved to the vertical position, the motor-driven linear conveyor which is mounted to the frame of the tilting table comes to alignment with the motor-driven linear conveyor of the magazine to transfer the sheet into the magazine.

While this solution allows transfer and storage of sheets into a magazine, all the linear conveyors of the magazine are driven by motors. Therefore, a glass sheet storage system as disclosed in the above patent would be very expensive to manufacture. Furthermore, the construction complexity of the magazine would not allow effective space management, thereby involving the problem that such glass sheet storage systems would be very bulky.

In order to obviate the drawbacks of the above storage systems, a storage magazine has been designed, which has frames for vertical storage of sheets, which frames are supported on a plurality of idle rollers. Such magazine, which is disclosed in EP1655248 by Hegla, has a single handling unit located below the series of idle rollers and is equipped with a drive belt connected to a lifter device. The lifter device allows the drive belt to simultaneously contact and transfer motion to all the idle rollers of each frame, to handle the sheets supported on the rollers and move them from the storage magazine and to the handling equipment and vice versa.

While this solution provides a storage magazine having a single motor drive for all the drive belts of the magazine, it still suffers from the drawback that the handling unit is placed in a very inconvenient position, thereby hindering maintenance operations, which are very frequent in such magazines and should be accomplished in short times. Furthermore, the presence of rollers allows storage of one sheet per frame, which involves space wastes if the sheets to be stored are of small to medium sizes. **Other storage magazines are known by documents** DE 19509076**,** DE 202008013148**,** DE 202008011686**,** CH 487785**,** DE 8706291**, abstract of** JP 63147706**.**

In the light of the above, the need arises for a glass sheet storage magazine that has a compact size and can facilitate maintenance of the devices of the magazine.

In one aspect, the object of the present invention is to provide a glass sheet storage magazine that has such structural and functional features as to fulfill the above needs, while obviating the drawbacks of the prior art.

The above object is fulfilled by a glass sheet storage magazine as defined in claim 1.

Further characteristics and advantages of the glass sheet storage magazine of the present invention will be apparent from the following description of preferred embodiments thereof, which are given by way of illustration and without limitation with reference to the accompanying figures, in which:
- Figure 1 is a top view of the glass sheet storage magazine located beside a tilting table according to an embodiment of the present invention;
- Figure 2 is a perspective view of the magazine and the control device for controlling the glass sheet storage system of Figure 1;
- Figure 3 is a top view of a part of the sheet handling unit of the magazine and the control device for controlling the glass sheet storage magazine of Figure 1;
- Figure 4 is a top view of the bevel gear pair of the control device of the invention;
- Figure 5 is a side view of the control device in a first control configuration according to the invention;
- Figure 6 is a perspective view of the control device in the first control configuration of Figure 4;
- Figure 7 is a side view of the control device in a second control configuration according to the invention;
- Figure 8 is a detailed side view of the control device in the first control configuration according to the invention;
- Figure 9 is a detailed side view of the control device in the second control configuration according to the invention.

Referring to the annexed figures, numeral 1 generally designates a glass sheet storage system.

The storage system 1 may include a sheet storage magazine 100, a control device 200 and a tilting table 300 that can cooperate with one another.

The magazine 100 has a support framework 110 for supporting a plurality of frames 120.

The frames 120 have a substantially vertical orientation. They are arranged in parallel relation along a longitudinal axis (X-X) as described in greater detail below.

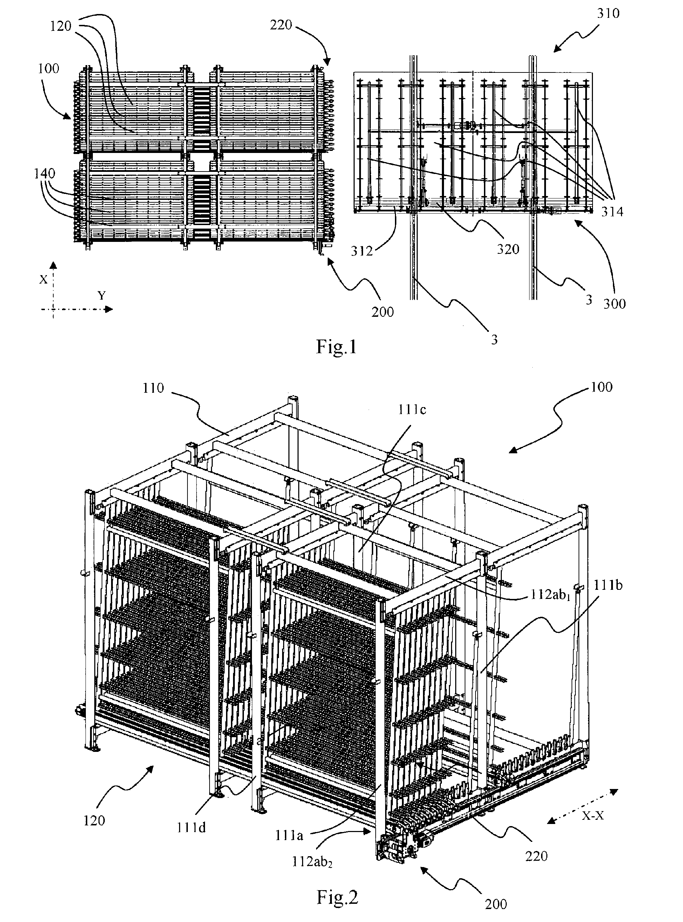

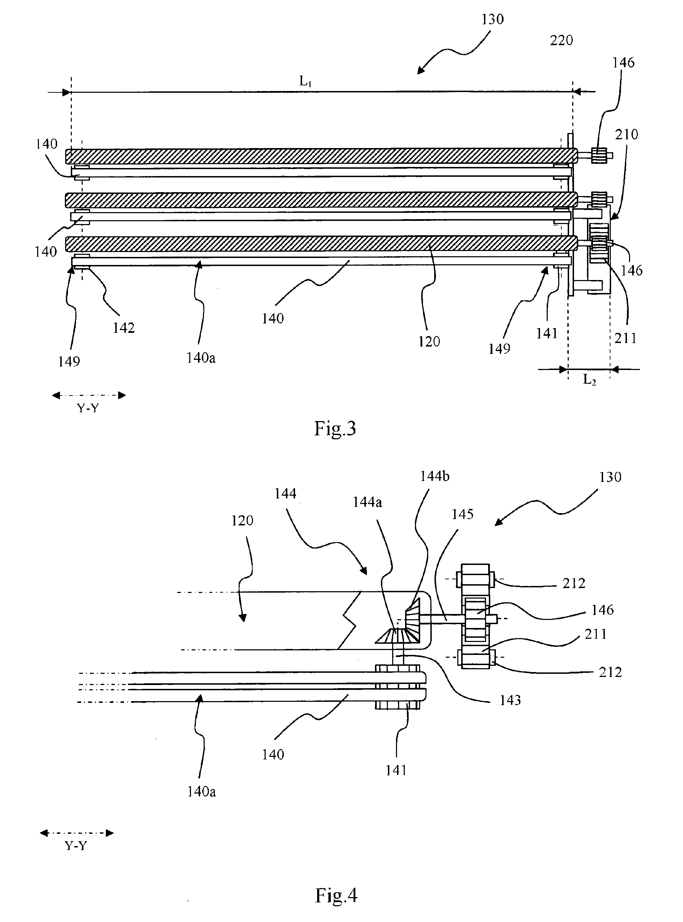

Preferably, the support framework 110 of the magazine 1 may include a plurality of bars 111 fastened together at their ends to form a skeleton as shown in the example of Figure 2. The support framework 110 may include, for instance, at least four vertical bars 111a, 111b, 111c, 111d for defining respective sides of the framework 110. The bar 111a is connected to the bar 111b by two horizontal bars 112ab₁,112ab₂, the bar 112ab₁ being fastened substantially at the upper end of each bar 111a, 111b respectively and the other bar 112ab₂ being fastened substantially at the lower end of each bar 111a, 111b respectively. Likewise, the connection between the bars 111b and 111c, 111c and 111d, 111d and 111a is achieved by horizontal bars (not shown in Figure 4).

Preferably, each of the bars 111a, 111b, 111c, 111d has a length ranging from 2000 mm to 5000 mm. In one embodiment, each of the bars 111a, 111b, 111c, 111d is 4000 mm long.

Of course, the skilled person appreciate that different types of support frameworks 110 may be used for supporting the frames 120.

The frames 120 are adapted to support large, medium or small flat glass sheets. As used herein and in the accompanying claims, a large sheet is preferably meant as a 7000 mm long, 3300 mm wide and 2 mm to 30 mm thick flat sheet.

In one embodiment, the frames 120 are adapted to support medium or small flat glass sheets. For example, small flat glass sheets may be 500 mm long and 500 mm wide.

Each frame 120 has a substantially flat shape. Particularly, each frame 120 may include vertical and horizontal profiles connected together to form a rigid structure, for receiving and supporting at least one glass sheet in a substantially vertical orientation.

The frames 120 are fixed to the framework 110 and arranged in parallel relation along the longitudinal axis X-X transverse to the plane of the frames 120.

In one embodiment, each frame 120 is inclined to the vertical axis orthogonal to the surface/floor on which the magazine 100 is installed by an angle ranging from 2° to 10°.

As shown in the example of Figure 3, the frames 120 are adapted to receive and/or support at least one glass sheet on a conveyor belt 140.

To this end, the magazine 100 may include a sheet handling unit 130 for transferring the glass sheets to and from each frame 120. Particularly, the handling unit 130 has a plurality of conveyor belts 140.

In one embodiment, each conveyor belt 140 is connected to the lower end of the frame 120.

The conveyor belt 140 is wound around first 141 and second driving members 142. The latter are adapted to rotate about their own axes to form a feed branch 140a and a return branch 140b of the conveyor belt 140.

As shown in the example of Figure 3, 6 or 7, the first and second driving members 141, 142 are adapted to rotate on bearings, each being supported by a bracket 149 connected to the support framework 110 of the magazine. Of course, the skilled person will appreciate that the first and second driving members 141, 142 may be supported in other fashions, for instance by placing the bearings on brackets 149 connected, for instance, directly to the frame 120.

The conveyor belts 140 are oriented along the major axis Y-Y of each frame 120.

Referring to the example as shown in Figure 3, the axes of rotation of the first and second driving members 141, 142 of any one of the conveyor belts 110 are stationary relative to the support framework 110.

In one embodiment, the first and second driving members 141, 142 may include delays, wheels, gears, etc.

In one embodiment, the frames 120 and/or the conveyor belt 140 are parallel to each other and extend substantially along the same axis Y-Y.

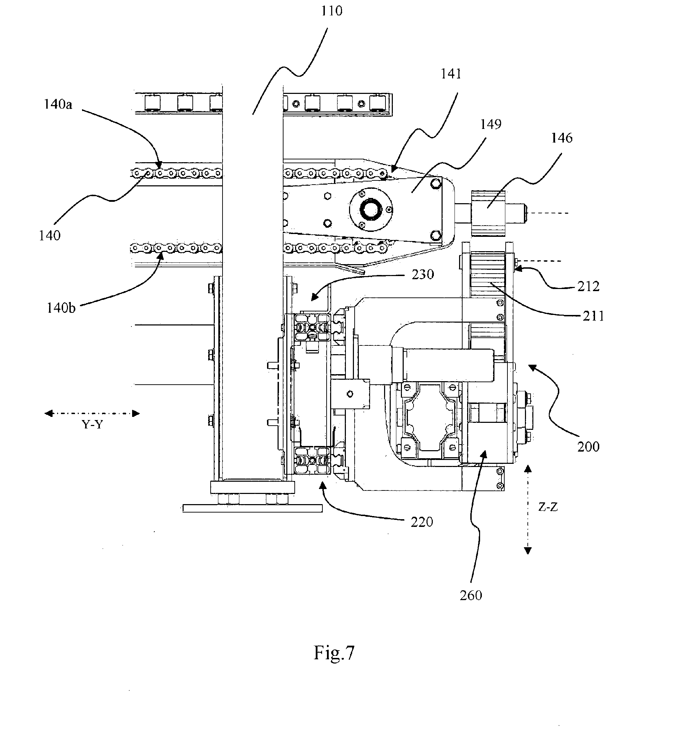

As shown in the example of Figure 7, the feed branch 140a of the conveyor belt 140 is adapted to support at least one glass sheet (not shown). Particularly, the glass sheet is supported by the feed branch 140a substantially at its lower edge.

As shown in the example of Figure 1, the tilting device 300 is designed to receive and transfer the glass sheets from and to the magazine 100 respectively.

The tilting device 300 is located on one side of the magazine 100. The side of the magazine 100 shall be intended as any one of the glass sheet entry (and/or exit) sides in and out of the magazine 100 along the transverse axis Y-Y.

In one embodiment, the tilting device 300 comprises a frame 310 for supporting one or more glass sheets.

The frame 310 has a cross member 312 extending substantially along the transverse axis Y-Y from which a plurality of posts 314 orthogonally project along the vertical axis Z-Z orthogonal to the floor.

The frame 310 is adapted to rotate about the axis of the cross member 312 to collapse and/or erect the posts 314 between a substantially vertical position and a substantially horizontal position. Thus, the glass sheets may be received along a substantially horizontal axis on the tilting device 300 from a workstation (e.g. a cutting station) to be later oriented along a substantially vertical axis for storage.

In one embodiment, the tilting device 300 is adapted to be coupled to at least one guide 2 (such as rails or tracks) installed on the installation surface/floor (referenced X-Y in Figure 1), for the tilting device 300 to be movable along an axis parallel to the longitudinal axis X-X.

In one embodiment, the tilting device 300 comprises a linear conveyor 320 which is fixed below the frame 310 and extends along the transverse axis Y-Y. As the tilt device 300 moves along the guides 3, the linear conveyor 320 can come to alignment with any one of the conveyor belts 140. Thus, one or more glass sheets may be received and transferred from and to the magazine 100 respectively, by aligning the linear conveyor 320 of the tilting table 300 to anyone of the conveyor belt 140 of the magazine 100.

As shown in the example of figure 1, the storage system 1 may comprise a control device 204 from moving the conveyor belts 140.

In one embodiment, the control device 200 is mounted on board the magazine 100 for moving the conveyor belts 140.

To this end, the control device 200 is equipped with a control member 210 which comes to operative and selective engagement with each first driving member 141 to control motion of one conveyor belt 140 at a time. Thus, each glass sheet on the conveyor belt 140 may be moved along an axis Y-Y transverse to the longitudinal axis X-X. In practice, the control member 210 is operatively connectable with each first driving member 141 from moving each conveyor belt 140 along the axis Y-Y in both directions.

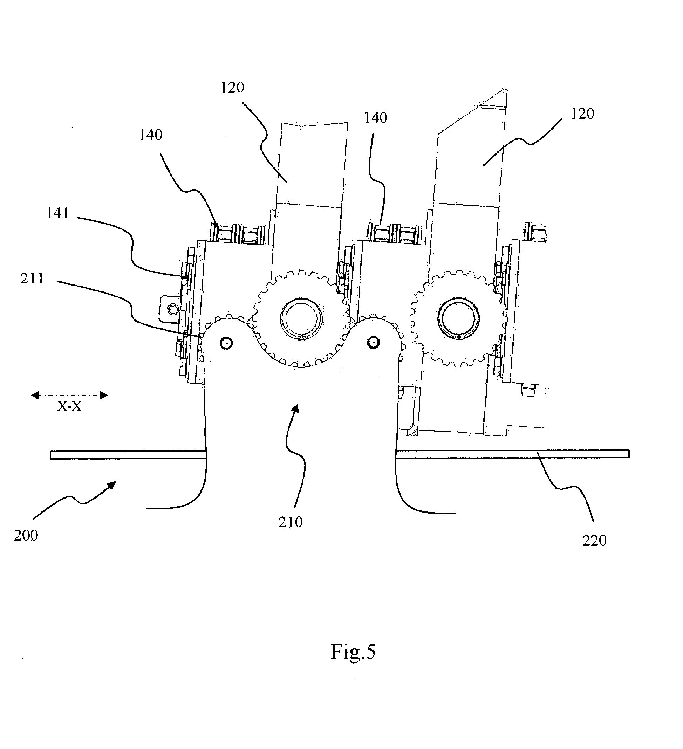

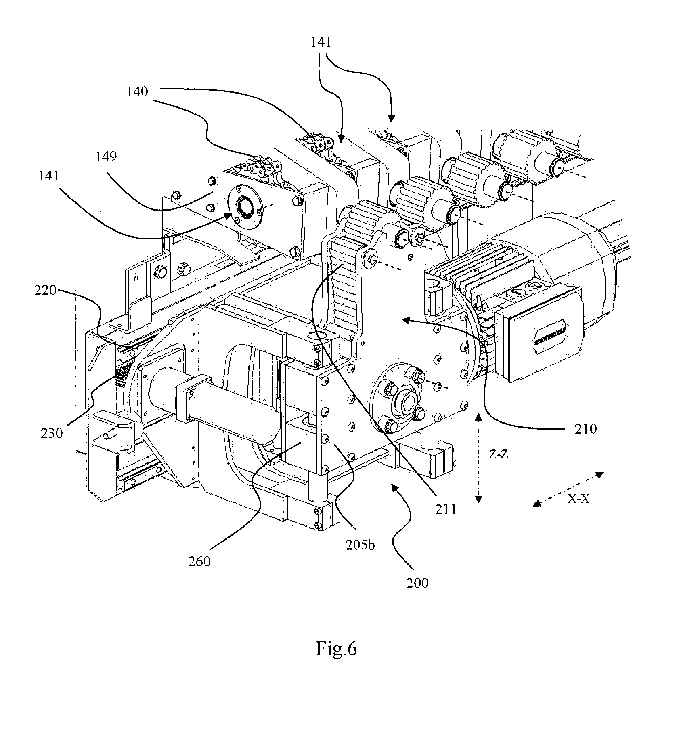

As shown in the example of figure 5 or 6, the control device 200 comprises guide means 220 for guiding the motion of the control member 210. Preferably, the guide means 220 extend along the longitudinal axis X-X. In one embodiment, the guide means 220 are fixed to the framework 110.

The guide means 220 may include, for instance, guides, racks, sliders, etc. to guide the motion of the control member 210.

In a further embodiment, the control device 200 comprises driving means 230 for slideably moving the control member 210 on the guide means 220. This will allow operative and selective engagement of any one of the first driving members 141 of a conveyor belt 110 to receive and store the glass sheets in the magazine 100.

The driving means 230 may include, for instance, electric motors or pneumatic units. Of course, the skilled person will appreciate that different driving means may be used, as long as they can accomplish the task of moving the control member 210 along with guide means 220.

In one embodiment, the control member 210 is adapted to slideably move along the longitudinal axis X-X below the first driving members 141.

Referring to the example as shown in the embodiment of figure 1, the guide means 220 of the control device 200 may be fixed to the floor.

In one embodiment, the guide means 220 of the control device 200 may be fixed to the tilting device 300.

In one embodiment, the guide means 220 of the control device 200 may be fixed to the magazine 100 or the framework 110 of the magazine 100.

Still referring to the example as shown in figure 1, the control device 200 is slideably movable along the axis X-X.

In one embodiment, the control member 200 is slideably movable along the axis X-X between the magazine 100 and the tilting table 300.

In one embodiment, not shown, the magazine 100 may be located between the control device 200 and the tilting table 300.

It shall be noted that the above described positions of the control device 200 allow customization of the glass sheets storage system according to customers' needs. For example, an embodiment in which the magazine 100 can be placed between the control device 200 and the tilting table 300 is highly advantageous in that it affords easy operation on the control device 200 whenever maintenance is required.

As shown in the example of figure 6 or 7, the control device 200 comprises lifter means 260 for lifting the control member 210. Thus, the control member 210 may be alternately connected to any one of the first driving members 141 of a conveyor belt 140 for handling glass sheets into or out of the magazine 100.

In one embodiment, the lifter means 260 include motor- or air-driven units, which are adapted to move the control member 210 between a first position and a second position along a vertical axis Z-Z. Particularly, in the first position the control member 210 is in a first control configuration, engaged with any one of the first driving members 141, whereas in the second position the control member 210 is in a second control configuration, disengaged from any one of the first driving members 141.

As shown in the example of figure 4, the axis of rotation of the control member 210 is orthogonal to the axis of rotation of the first driving members 141.

In a further embodiment, the axis of rotation of the control member 210 is coplanar with the axis of rotation of the first driving members 141.

In one embodiment (not shown), the control member 210 is adapted to rotate about an axis parallel to the axis of each of the first driving members 141.

In one embodiment, the control member 210 is adapted to rotate about an axis not parallel to the axis of the first driving members 111.

Referring to the example of Figure 4, the first driving member 141 may be keyed to a shaft 143 and be coaxial thereto. A first gear 144a is keyed to the opposite end of the shaft 143 in which the first driving member 141 is provided. In one embodiment, the first gear 144a is coaxial with the shaft 143.

The handling unit 130 may include a second gear 144b which is adapted to be coupled to the first gear 144a to form a bevel gear pair 144. Therefore, the two gears 144a, 144b may be coupled with their axes of rotation inclined to each other at a predetermined angle. To this end, the first and second gears 144a, 144b may have a conical shape.

In one embodiment, the axis of rotation of the first gear 144a is orthogonal to the axis of rotation of the second gear 144b.

In one embodiment, the axis of rotation of the first gear 144a lies on the same plane as the axis of rotation of the second gear 144b.

Still referring to the example of Figure 4, the second gear 144b may be keyed to a shaft 145 which may have a third driving member 146 keyed to its end.

In one embodiment, the control member 200 is adapted to directly engage the third driving member 146 when the lifter means 260 lift the control member 210 towards the first driving member 141. Thus, the drive provided by the bevel gear pair can move any one of the conveyor belts 140 in either direction along the axis Y-Y according to the direction of rotation of the control member 210.

In one embodiment (not shown), the control member 200 is adapted to directly engage the first driving member 141.

It shall be noted that the control member 210 may include, for instance, pulleys, wheels, gears, drive belts, chains, etc.

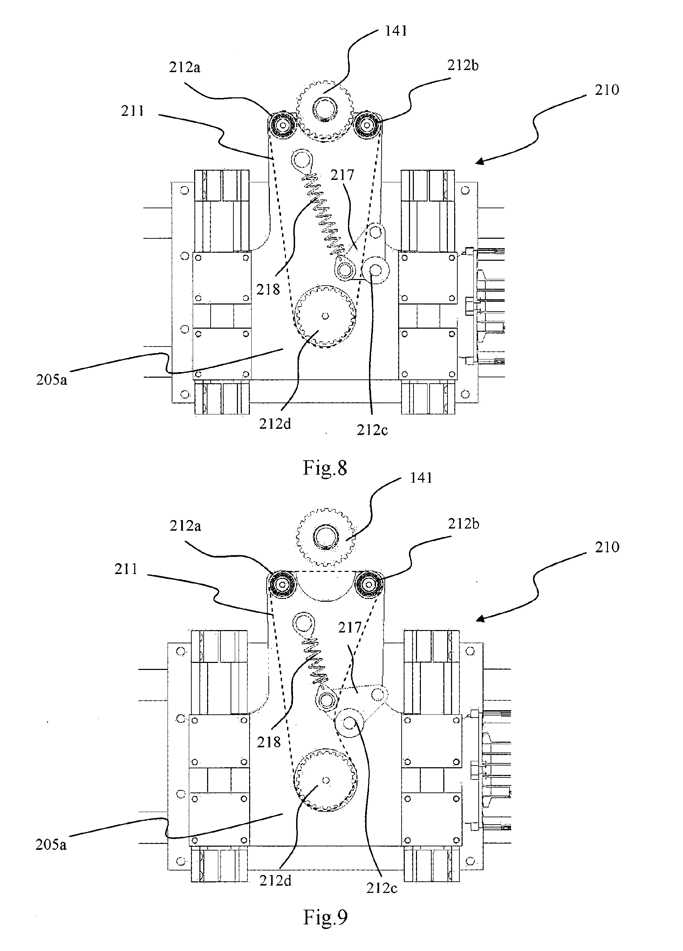

As shown in the example of Figure 8 or 9, the control member 210 may include a drive belt 211 (or an equivalent drive chain), circulating about a plurality of rollers 212a,212b,212d, which rotate about their respective axes.

In one embodiment, the drive belt 211 is elastic.

In one embodiment, the axis of each of the rollers 212a,212b,212d is parallel to the axis of rotation of the first driving members 141.

In one embodiment, the axis of each of the rollers 212a,212b,212d is not parallel to the axis of rotation of the first driving members 141.

In one embodiment, the axis of each of the rollers 212a,212b,212d is orthogonal to the axis of rotation of the first driving members 141.

As shown in the example of Figure 3, the dimension L₂ of the control device 200 along the axis Y-Y of the conveyor belts 140 is less than 75% of the length L₁ of a conveyor belt 140.

In one embodiment, the dimension L₂ of the control device 200 along the axis Y-Y of the conveyor belts 110 is less than 75% of the length L₁ of a frame 120.

In one embodiment, the dimension L₂ of the control device 200 along the axis Y-Y of the conveyor belts 110 may range from 1% to 15% of the length L₁ of a frame 120.

In one embodiment, the dimension L₂ of the control device 200 along the axis Y-Y may range from 100 mm to 1000 mm. In one embodiment, the dimension L₂ of the control device 200 along the axis Y-Y may be 400 mm long.

It shall be noted that the length L₁ of a conveyor belt 140 may range from 2000 mm to 7000 mm to support large, medium and/or small glass sheets. In one embodiment, the length L₁ of a conveyor belt 140 may be 6000 mm long.

As shown in the example of Figure 8, the control device 110 has two idle upper rollers 212a,212b and a powered roller 212d, for imparting motion to the drive belt 211.

In one embodiment, the drive belt 211 is wound about the rollers 212a,212b and 212d.

In one embodiment, the path of the drive belt 211 is substantially defined by the convex envelope of the rollers 212a,212b and 212d.

In one embodiment, the rollers 212a,212b are placed above the powered roller 212d, relative to the installation plane X-Y of the storage system 1.

In one embodiment, the axes of the rollers 212a,212b lie on a common substantially horizontal plane, relative to the installation plane X-Y of the storage system 1.

In one embodiment, the length of the drive belt 211 substantially matches the length of the convex envelope of the rollers 212a,212b and 212d.

In one embodiment, the length of the drive belt 211 is greater than the length of the convex envelope of the rollers 212a,212b and 212d.

In one embodiment, the control device 200 may comprise a tensioning roller 212c, which is adapted to rotate about its own axis and is placed between the right upper roller 212b and the powered roller 212d. In one embodiment, the tensioning roller 212c is idle.

In one embodiment, the tensioning roller 212c is adapted to adjust the tension of the drive belt 211. Particularly, the tensioning roller 212c is supported by a plate 217 that is movable between first and second positions. In one embodiment, the plate 217 has a substantially triangular shape.

As shown in the examples of Figure 8 or 9, the plate 217 is pivoted at one apex to rotate about its pivot. The tensioning roller 212c and an elastic means 218 are movably fixed at the end apices opposite to the pivot. The elastic means 218 is preloaded so that, when the control member 210 is in the second control configuration, i.e. when the drive belt 211 does not engage the first driving member 141, the drive belt 211 may be always tensioned about the rollers 212a, 212b and 212d. In practice, the tensioning roller 212c is pushed by the elastic means 218 along an axis substantially orthogonal to the outer surface portion of the drive belt 211 between the roller 212b and the powered roller 212d.

In one embodiment, the elastic means 218 is connected at one end to the control unit 300 and at an opposite end to the plate 217.

In one embodiment (not shown), the tensioning roller 212c is movable between a first position and a second position on guide means (not shown) so that, when the control member 210 is in the second control configuration, i.e. when the drive belt 211 does not engage the first driving member 141, the drive belt 211 may be always tensioned about the rollers 212a, 212b and 212d.

As shown in the example of figure 6, 7, 8 or 9, the control unit 210 has an inner base body 205a which is operatively connected to the guide means 220. In one embodiment, the control unit 210 has an outer base body 205b which is operatively connected to the inner base body 205a. Particularly, the rollers 212a,212b,212c,212d and the drive belt 211 are enclosed between the inner base body 205a and the outer base body 205b. In short, the outer base body 205b acts as a cover for the control device 210 so that, should any maintenance be required, the control device 210 would be easily and quickly accessible.

It shall be noted that the inner base body 205a and the outer base body 205b face towards each other and have holes for supporting the rollers 212a,212b and 212d respectively, while leaving them free to rotate about their respective axes of rotation.

In one embodiment, the inner base body 205a mainly extends along the vertical axis Z-Z and has the form of an inverted T.

In one embodiment, a chamfered portion is provides at the upper end of the inner base body 205a (and accordingly at the upper end of the outer base body 205b), for receiving the shaft of any one of the first driving members 141. Thus, in the first control configuration, the axis of rotation of any one of the first driving members 141 is substantially aligned with the axes of rotation of the upper rollers 212a,212b. In practice, in the first control configuration, the first driving members 141 have the drive belt 211 partially wound thereabout, to provide a highly effective drive, capable of moving the conveyor belts 140 even at high torques.

In one embodiment, the control member 210 comes to operative engagement with a surface portion of any one of the first driving members 141.

In one embodiment, the engagement portion circumferentially extends over at least 20% of the total circumference of the first driving member 141.

In one embodiment (not shown), the width of the drive belt 211 may be smaller or greater than the width of the first driving member 141. In one embodiment, the width of the drive belt 211 may substantially match the width of the first driving member 141.

In one embodiment (not shown), the width of the drive belt 211 may be smaller or greater than the width of the third driving member 146. In one embodiment, the width of the drive belt 211 may substantially match the width of the third driving member 146.

It shall be noted that, in a further aspect, the present invention relates to a control device 200 adapted to also operatively and selectively engage other driving members of storage devices other than the above described magazines 100. Therefore, the above described control device 200 can cooperate with any sheet storage station and/or with any sheet processing station to move and transfer the sheets between said stations.

In one embodiment, not shown, the magazine 100 may also have an additional control member operatively and selectively engageable with each second driving member 142, that can operate independently of the control device 200.

For instance, two control members may be provided to control the motion of one conveyor belt 140 at a time, by operatively and selectively engaging the first 141 or second driving member 142. In short, the control device 200 would be installed at one side of the magazine 100 whereas an additional control device would be installed at the opposite side.

As clearly shown in the above description, the sheet storage magazine of the present invention fulfills the needs and obviates prior art drawbacks as set out in the introduction of this disclosure. Particularly, the system 1 allows storage of one or more sheets, possibly of different sizes, on the same frame 120.

## Claims

1. A glass sheet storage magazine (100) having a plurality of **vertically oriented** frames (120), in parallel arrangement along a longitudinal axis (X-X) and adapted to receive and support at least one glass sheet on a conveyor belt (140) wound around first and second driving members (142),
**characterized in that** it comprises a control device (200) having:
- a control member (210) adapted for operative and selective engagement with each of the first driving members (141) to control the movement of one conveyor belt (140) at a time, so that each glass sheet resting thereon can be moved transverse to said longitudinal axis (X-X),
- guide means (220) extending along said longitudinal axis (X-X) for guiding the motion of said control member (210),
- driving means (230) for slideably driving said control member (210) on said guide means (220) for operative and selective engagement of any one of said first driving members (141) of a conveyor belt (140) to receive and store said glass sheets in said magazine (1).

2. A magazine (100) as claimed in claim 1, wherein the size (L₂) of said control device (200) along the axis (Y-Y) of said conveyor belts (140) is less than 75% of the length (L₁) of each conveyor belt (140).

3. A magazine (100) as claimed in claim 1 or 2, wherein said control member (210) is adapted to slideably move along said longitudinal axis (X-X) below said first driving members (141).

4. A magazine (1) as claimed in any claim from 1 to 3, wherein the control device (200) comprises lifter means (260) for lifting the control member (210) toward any one of said first driving members (141) so that said control member (210) can be operatively and alternately engaged with any one of said first driving members (141) of a conveyor belt (140).

5. A magazine (1) as claimed in claim 4, wherein said control member (210) comes to operative engagement with a surface portion of any one of said first driving members (141), said engagement portion circumferentially extending over at least 20% of the total circumference of said first driving member (141).

6. A magazine (1) as claimed in claim 4 or 5, wherein said control member (210) comprises a drive belt (211) circulating around a plurality of rollers (212) adapted to rotate about their respective axes, the axis of at least one of said rollers (212) being parallel to the axis of each of said first driving members (141).

7. A magazine (1) as claimed in claim 4 or 5, wherein said control member (210) comprises a drive belt (211) circulating around a plurality of rollers (212) adapted to rotate about their respective axes, the axis of at least one of said rollers (212) being non parallel to the axis of each of said first driving members (141).

8. A magazine (1) as claimed in claim 4 or 5, wherein said control member (210) comprises a drive belt (211) circulating around a plurality of rollers (212) adapted to rotate about their respective axes, the axis of at least one of said rollers (212) being orthogonal to the axis of each of said first driving members (141).

9. A magazine (1) as claimed in any claim from 1 to 8, wherein the axes of said first (141) and second (142) driving members of any one of said plurality of conveyor belts (140) are fixed with respect to said support framework (110).

10. A magazine (1) as claimed in any claim from 1 to 9, wherein said guide means (220) of said control device (200) are fixed to said magazine (1).

11. A magazine (1) as claimed in any claim from 1 to 9, wherein said guide means (220) of said control device (200) are fixed to the floor.

## Patentansprüche

1. Magazin (100) zum Lagern von Glasplatten, das eine Vielzahl von senkrecht ausgerichteten Rahmen (120) aufweist, die entlang einer Längsachse (X-X) parallel angeordnet und geeignet sind, mindestens eine Glasplatte auf einem Förderband (140) aufzunehmen und zu tragen, das um erste und zweite Antriebsglieder (142) gewunden ist,
**dadurch gekennzeichnet, dass** es eine Steuereinrichtung (200) umfasst, die Folgendes aufweist:
- ein Steuerglied (210), das zum betriebsfähigen und selektiven Eingriff mit jedem der ersten Antriebsglieder (141) geeignet ist, um die Bewegung von jeweils nur einem Förderband (140) so zu steuern, dass jede darauf ruhende Glasplatte quer zur Längsachse (X-X) bewegt werden kann,
- Führungsmittel (220), die sich entlang dieser Längsachse (X-X) erstrecken, zum Führen der Bewegung des Steuerglieds (210),
- Antriebsmittel (230) zum gleitenden Antreiben des Steuerglieds (210) auf den Führungsmitteln (220) für den betriebsfähigen und selektiven Eingriff von einem der ersten Antriebsglieder (141) eines Förderbands (140) zum Aufnehmen und Lagern der Glasplatten in dem Magazin (1).

2. Magazin (100) nach Anspruch 1, bei dem die Abmessung (L₂) der Steuereinrichtung (200) entlang der Achse (Y-Y) der Fördererbänder (140) weniger als 75% der Länge (L₁) von jedem Förderband (140) beträgt.

3. Magazin (100) nach Anspruch 1 oder 2, bei dem sich das Steuerglied (210) gleitend entlang der Längsachse (X-X) unter den ersten Antriebsgliedern (141) bewegen kann.

4. Magazin (1) nach einem der Ansprüche von 1 bis 3, bei dem die Steuereinrichtung (200) Hebemittel (260) zum Anheben des Steuerglieds (210) zu einem der ersten Antriebsglieder (141) hin umfasst, so dass das Steuerglied (210) betriebsfähig und wechselweise mit einem der ersten Antriebsglieder (141) eines Förderbands (140) in Eingriff gebracht werden kann.

5. Magazin (1) nach Anspruch 4, bei dem das Steuerglied (210) in einen betriebsfähigen Eingriff mit einem Oberflächenabschnitt von einem der ersten Antriebsglieder (141) kommt, wobei sich dieser Eingriffsabschnitt zirkumferenziell über mindestens 20% des Gesamtumfangs des ersten Antriebsglieds (141) erstreckt.

6. Magazin (1) nach Anspruch 4 oder 5, bei dem das Steuerglied (210) ein Antriebsband (211) umfasst, das um eine Vielzahl von Walzen (212) umläuft, die sich um ihre jeweiligen Achsen drehen können, wobei die Achse von mindestens einer dieser Walzen (212) parallel zur Achse von jedem der ersten Antriebsglieder (141) ist.

7. Magazin (1) nach Anspruch 4 oder 5, bei dem das Steuerglied (210) ein Antriebsband (211) umfasst, das um eine Vielzahl von Walzen (212) umläuft, die sich um ihre jeweiligen Achsen drehen können, wobei die Achse von mindestens einer dieser Walzen (212) nicht parallel zur Achse von jedem der ersten Antriebsglieder (141) ist.

8. Magazin (1) nach Anspruch 4 oder 5, bei dem das Steuerglied (210) ein Antriebsband (211) umfasst, das um eine Vielzahl von Walzen (212) umläuft, die sich um ihre jeweiligen Achsen drehen können, wobei die Achse von mindestens einer dieser Walzen (212) rechtwinklig zur Achse von jedem der ersten Antriebsglieder (141) ist.

9. Magazin (1) nach einem der Ansprüche von 1 bis 8, bei dem die Achsen der ersten (141) und zweiten (142) Antriebsglieder von jedem der Vielzahl von Fördererbändern (140) in Bezug auf das Traggestell (110) ortsfest sind.

10. Magazin (1) nach einem der Ansprüche von 1 bis 9, bei dem die Führungsmittel (220) der Steuereinrichtung (200) am Magazin (1) befestigt sind.

11. Magazin (1) nach einem der Ansprüche von 1 bis 9, bei dem die Führungsmittel (220) der Steuereinrichtung (200) am Boden befestigt sind.

## Revendications

1. Magasin de stockage de feuilles de verre (100) ayant une pluralité de châssis orientés verticalement (120), en agencement parallèle suivant un axe longitudinal (X-X) et adaptés pour recevoir et supporter au moins une feuille de verre sur un convoyeur à courroie (140) enroulé autour de premiers et deuxièmes éléments d'entraînement (142),
**caractérisé en ce qu'**il comprend un dispositif de commande (200) comprenant :
- un élément de commande (210) adapté pour un engagement fonctionnel et sélectif avec chacun des premiers éléments d'entraînement (141) pour commander le mouvement d'un convoyeur à courroie (140) à chaque fois, de manière que chaque feuille de verre reposant sur celui-ci puisse être déplacée transversalement audit axe longitudinal (X-X),
- des moyens de guidage (220) s'étendant suivant ledit axe longitudinal (X-X) pour guider le mouvement dudit élément de commande (210),
- des moyens d'entraînement (230) pour entraîner de manière coulissante ledit élément de commande (210) sur lesdits moyens de guidage (220) pour un engagement fonctionnel et sélectif de l'un quelconque desdits premiers éléments d'entraînement (141) d'un convoyeur à courroie (140) pour recevoir et stocker lesdites feuilles de verre dans ledit magasin (1).

2. Magasin (100) selon la revendication 1, dans lequel la dimension (L₂) dudit dispositif de commande (200) suivant l'axe (Y-Y) desdits convoyeurs à courroie (140) est inférieure à 75% de la longueur (L₁) de chaque convoyeur à courroie (140).

3. Magasin (100) selon la revendication 1 ou 2, dans lequel ledit élément de commande (210) est adapté pour se déplacer de manière coulissante le long dudit axe longitudinal (X-X) au-dessous desdits premiers éléments d'entraînement (141).

4. Magasin (1) selon l'une quelconque des revendications 1 à 3, dans lequel le dispositif de commande (200) comprend des moyens de soulèvement (260) pour soulever l'élément de commande (210) vers l'un quelconque desdits premiers éléments d'entraînement (141) de manière que ledit élément de commande (210) puisse être engagé fonctionnellement et alternativement avec l'un quelconque desdits premiers éléments d'entraînement (141) d'un convoyeur à courroie (140).

5. Magasin (1) selon la revendication 4, dans lequel ledit élément de commande (210) vient en engagement fonctionnel avec une portion de surface de l'un quelconque desdits premiers éléments d'entraînement (141), ladite portion d'engagement s'étendant de manière circonférentielle sur au moins 20% de la circonférence totale dudit premier élément d'entraînement (141).

6. Magasin (1) selon la revendication 4 ou 5, dans lequel ledit élément de commande (210) comprend une courroie d'entraînement (211) circulant autour d'une pluralité de rouleaux (212) adaptés pour tourner autour de leurs axes respectifs, l'axe d'au moins un desdits rouleaux (212) étant parallèle à l'axe de chacun desdits premiers éléments d'entraînement (141).

7. Magasin (1) selon la revendication 4 ou 5, dans lequel ledit élément de commande (210) comprend une courroie d'entraînement (211) circulant autour d'une pluralité de rouleaux (212) adaptés pour tourner autour de leurs axes respectifs, l'axe d'au moins un desdits rouleaux (212) étant non parallèle à l'axe de chacun desdits premiers éléments d'entraînement (141).

8. Magasin (1) selon la revendication 4 ou 5, dans lequel ledit élément de commande (210) comprend une courroie d'entraînement (211) circulant autour d'une pluralité de rouleaux (212) adaptés pour tourner autour de leurs axes respectifs, l'axe d'au moins un desdits rouleaux (212) étant orthogonal à l'axe de chacun desdits premiers éléments d'entraînement (141).

9. Magasin (1) selon l'une quelconque des revendications 1 à 8, dans lequel les axes desdits premier (141) et deuxième (142) éléments d'entraînement de n'importe laquelle de ladite pluralité de convoyeurs à courroie (140) sont fixes par rapport à ladite structure de support (110).

10. Magasin (1) selon l'une quelconque des revendications 1 à 9, dans lequel lesdits moyens de guidage (220) dudit dispositif de commande (200) sont fixés audit magasin (1).

11. Magasin (1) selon l'une quelconque des revendications 1 à 9, dans lequel lesdits moyens de guidage (220) dudit dispositif de commande (200) sont fixés au sol.
